# EUROPEAN PATENT APPLICATION

(11) **EP 4 642 015 A1**
(43) Date of publication of application: **29.10.2025**
(21) Application number: 23929904.3
(22) Date of filing: 27.10.2023
(51) Int. Cl.: H04M 1/02, H05K 5/02, H05K 7/02

(54) **ELECTRONIC APPARATUS**

(30) Priority: 30.03.2023 CN 202320751180 U
(71) Applicant: Honor Device Co., Ltd., Shenzhen, Guangdong 518040 (CN)
(72) Inventor: LV, Yan, Shenzhen, Guangdong 518040 (CN)
(74) Representative: MERH-IP Matias Erny Reichl Hoffmann Patentanwälte PartG mbB
(86) International application number: PCT/CN2023/127159
(87) International publication number: WO 2024/198334

(57) **Abstract**

Embodiments of this application provide an electronic device, including a circuit board, an interface component, a housing, and a first display screen. The housing includes a first middle frame and a second middle frame that are rotatably connected to each other. The first display screen covers on a same side of the first middle frame and the second middle frame. The first middle frame has an accommodation cavity and a plug-in interface that communicate with each other. The circuit board is located in the accommodation cavity. A surface of the circuit board facing away from the first display screen is an element surface for arranging an element. The interface component is inserted in the plug-in interface and is electrically connected to the surface of the circuit board facing away from the first display screen. The interface component is configured to be electrically connected to an external device. A drive board is provided on a side of the first display screen facing the first middle frame. An electronic component group including at least one electronic component is provided on the drive board. The first middle frame has an accommodating cavity on a side facing the first display screen. The electronic component group is located in the accommodating cavity. The electronic device provided in this application can implement accommodating of the electronic component group and the drive board in the first middle frame.

## Description

This application claims priority to Chinese Patent Application No. 202320751180.1, entitled "ELECTRONIC DEVICE" and filed with the China National Intellectual Property Administration on March 30, 2023, which is incorporated herein by reference in its entirety.

### TECHNICAL FIELD

This application relates to the field of electronic technologies, and in particular, to an electronic device.

### BACKGROUND

With development of science and technologies, people have increasingly high requirements for lightening and thinning, large battery capacity, and other performance of an electronic device such as a mobile phone.

Using a foldable-screen mobile phone as an example, the electronic device may include a first middle frame, a second middle frame, and a flexible display screen. The first middle frame and the second middle frame are rotatably connected to each other. The flexible display screen covers on a same side of the first middle frame and the second middle frame. A plug-in interface is provided on a frame of the first middle frame. An interface component in the electronic device is accommodated in the first middle frame and is inserted in the plug-in interface, to electrically connect the electronic device to an external device. To improve lightening and thinning, large battery capacity, and other performance of the electronic device, in the related art, a drive board of the flexible display screen is moved from the second middle frame into the first middle frame. Consequently, an electronic component on the drive board cannot be accommodated in the first middle frame.

How to accommodate the electronic component on the drive board in the first middle frame while satisfying the lightening and thinning of the electronic device has become a technical problem to be resolved.

### SUMMARY

This application provides an electronic device, which can accommodate an electronic component on a drive board in a first middle frame while satisfying lightening and thinning of the electronic device.

A first aspect of embodiments of this application provides an electronic device. The electronic device includes a circuit board, an interface component, a housing, and a first display screen. The housing includes a first middle frame and a second middle frame that are rotatably connected to each other. The first display screen covers on a same side of the first middle frame and the second middle frame. The first middle frame has an accommodation cavity and a plug-in interface that communicate with each other. The circuit board is located in the accommodation cavity. The interface component is inserted in the plug-in interface and is electrically connected to a surface of the circuit board facing away from the first display screen. The interface component is configured to be electrically connected to an external device.

A drive board is provided on a side of the first display screen facing the first middle frame. An electronic component group including at least one electronic component is provided on the drive board. The first middle frame has an accommodating cavity at a position corresponding to the electronic component group. The electronic component group is located in the accommodating cavity.

In the embodiments of this application, the interface component is inserted in the plug-in interface, so that electrical connection and conduction between the electronic device and the external device can be implemented by using the interface component. Based on this, because the interface component is electrically connected to the surface of the circuit board facing away from the first display screen, a spacing between the interface component and the first display screen can be enlarged to facilitate formation of the accommodating cavity in the first middle frame, allowing the electronic component group on the drive board to be located in the accommodating cavity and to be assembled in the first middle frame together with the interface component. This not only ensures that the first display screen can be assembled in the first middle frame and the second middle frame, but also satisfies requirements of people for lightening and thinning and a large battery capacity of a foldable electronic device because the drive board is located on the side of the first display screen facing the first middle frame.

In some optional implementations, the surface of the circuit board facing away from the first display screen is an element surface of the circuit board. The element surface has at least one element protruding from the element surface. The element is disposed around a peripheral side of the interface component.

In this way, the interface component can reuse, in a thickness direction of the electronic device, a space occupied by the element in the first middle frame, to facilitate the lightening and thinning design of the electronic device.

In some optional implementations, a height of the interface component on the element surface is equal to or less than a maximum height of the element on the element surface, to avoid impact on a thickness of the electronic device when the interface component is disposed on the element surface.

In some optional implementations, the element includes at least one of an electronic element and a fastening element, allowing the interface component to reuse, in a thickness direction of the electronic device, a space occupied by the at least one of the electronic element and the fastening element in the first middle frame.

In some optional implementations, the fastening element includes at least one of an elastic piece and a fastener, allowing the interface component to reuse, in a thickness direction of the electronic device, a space occupied by the at least one of the elastic piece and the fastener in the first middle frame.

In some optional implementations, the first middle frame includes a middle board and a frame. The frame is disposed around a peripheral side of the middle board and surrounds the middle board to form the accommodation cavity. The plug-in interface is located on the frame. The accommodating cavity is a recessed region in the middle board recessed on a side facing the circuit board. In this way, the accommodating cavity can be formed in the middle board without affecting structural strength of the first middle frame, facilitating assembly of the drive board in the first middle frame.

In some optional implementations, the middle board is bent toward a side of the circuit board at a position corresponding to the electronic component group to form the accommodating cavity, and the middle board is supported on the circuit board, allowing the middle board to be further supported on the circuit board while the electronic component group is assembled in the accommodating cavity, to fasten the circuit board in the accommodation cavity.

In some optional implementations, the middle board has two bent portions and a horizontal support portion that supports the circuit board. The two bent portions are disposed on two opposite sides of the electronic component group along an axial direction of the plug-in interface and are both bent toward a side of the circuit board.

The horizontal support portion is connected between the two bent portions and surrounds the two bent portions to form the accommodating cavity.

In this way, the middle board can effectively use a distance between the interface component and the first display screen to form the accommodating cavity through partial bending of the middle board. This allows the middle board to be stably supported on the circuit board by using the horizontal support portion while implementing assembly of the electronic component group and the drive board in the first middle frame.

In some optional implementations, an outer edge contour of the accommodating cavity matches that of the electronic component group, to reduce a space occupied by the electronic component group in the first middle frame while ensuring that the electronic component group can be completely accommodated in the accommodating cavity, to further improve space utilization of the electronic device.

In some optional implementations, the interface component includes a component body. The component body has an electrical connection terminal and a plug-in terminal connected to the electrical connection terminal. The electrical connection terminal is electrically connected to a side of the circuit board facing the plug-in interface. The plug-in terminal is inserted in a middle part of the plug-in interface.

This not only allows the interface component to be electrically connected to the circuit board by using the electrical connection terminal, but also ensures smooth plugging of an external device at the plug-in terminal in the plug-in interface because the plug-in terminal is inserted in the middle part of the plug-in interface.

In some optional implementations, an insertion space communicating with the plug-in interface is provided between the circuit board and the plug-in interface, and the plug-in terminal is bent toward a side of the first display screen and runs through the insertion space to be inserted in the middle part of the plug-in interface, to ensure, through bending of the plug-in terminal, that the interface component can still be inserted into the middle part of the plug-in interface when the interface component is located on the element surface, thereby ensuring smooth plugging of an external device at the plug-in terminal in the plug-in interface.

In some optional implementations, an edge of the circuit board on a side facing the plug-in interface is provided with an opening, and the insertion space is provided between an edge of the opening and the first middle frame.

The electrical connection terminal is in electrical contact with the circuit board, and the plug-in terminal is clamped in the opening and bent in the insertion space toward a side of the first display screen.

This not only facilitates an electrical connection between the electrical connection terminal and the circuit board, but also allows the interface component to further reuse a particular space with the circuit board in a thickness direction of the electronic device because the plug-in terminal is clamped in the opening, thereby further reducing a height of the interface component on the circuit board.

In some optional implementations, the interface component further includes a cover plate, and the cover plate covers the electrical connection terminal and is connected to the circuit board, so that the cover plate is pressed onto the electrical connection terminal. This not only increases stability of the electrical connection between the electrical connection terminal and the circuit board, but also can protect the electrical connection terminal by covering the electrical connection terminal with the cover plate.

In some optional implementations, projection of the interface component and projection of the electronic component group on the circuit board at least partially overlap, to reduce a space occupied by the electronic component group and the interface component in a length direction of the first middle frame, thereby satisfying a requirement for a large battery capacity of the electronic equipment.

In some optional implementations, an end of the interface component electrically connected to the circuit board has a first projection surface on the circuit board, and the electronic component group is at least partially located in the first projection surface, to allow projection of the electrical connection terminal and projection of the electronic component group on the circuit board to at least partially overlap.

In some optional implementations, the first display screen is a flexible display screen, and the drive board is a drive circuit board.

In this way, the arrangement of the flexible display screen allows a shape of the first display screen to change accordingly when a configuration of the electronic device changes, to implement a function of folding and unfolding the electronic device. In addition, because the drive board is a drive circuit board, this helps the drive circuit board drive the first display screen, to implement a display function of the first display screen.

### BRIEF DESCRIPTION OF DRAWINGS

FIG. 1 is a diagram of a structure of an electronic device according to an embodiment of this application;
FIG. 2 is an exploded view of the electronic device in FIG. 1;
FIG. 3 is another diagram of the structure of the electronic device according to an embodiment of this application;
FIG. 4 is a diagram of the structure of the electronic device in FIG. 3 in a folded state;
FIG. 5 is a diagram of the structure of the electronic device in FIG. 3 in an unfolded state;
FIG. 6 is an exploded view of the electronic device in FIG. 5;
FIG. 7 is a diagram showing a position change of a drive board of a flexible display screen in an electronic device according to the related art;
FIG. 8 is a diagram showing assembly of an interface component in an electronic device according to the related art;
FIG. 9 is a first diagram showing assembly of an interface component in an electronic device according to an embodiment of this application;
FIG. 10 is a cross-sectional view of the electronic device in FIG. 9 taken along a direction A-A;
FIG. 11 is a partial exploded view of an electronic device according to an embodiment of this application;
FIG. 12 is a second diagram showing assembly of an interface component in an electronic device according to an embodiment of this application; and
FIG. 13 is a diagram of a structure of the electronic device in FIG. 10 from a different perspective.

Description of reference numerals:
100-electronic device; 1-first middle frame; 11-accommodation cavity; 12-middle board; 121-accommodating cavity; 122-bent portion; 123-horizontal support portion; 124-insertion space; 13-frame; 131-top border frame; 132-left border frame; 133-bottom border frame; 134-right border frame; 135-plug-in interface;
2-second middle frame; 3-rear cover; 4-first display screen; 41-drive board; 411-electronic component group; 5-circuit board; 5a-primary circuit board; 5b-secondary circuit board; 51-element; 511-connector; 512-coaxial line; 513-elastic piece; 52-element surface; 53-opening; 54-clamping slot;
6-interface component; 61-component body; 611-electrical connection terminal; 612-plug-in terminal; 613-insulation member; 614-pin; 62-cover plate; 621-clamping jaw; 63-first projection surface; 64-sealing ring; 7-camera module; 8-rotating assembly; 9-second display screen.

### DESCRIPTION OF EMBODIMENTS

Terms used in implementations in this application are merely intended to explain specific embodiments of this application rather than being intended to limit this application.

An embodiment of this application provides an electronic device. The electronic device may include, but is not limited to, a mobile phone (for example, a foldable-screen mobile phone or a non-foldable-screen mobile phone), a tablet computer (that is, a pad), a virtual reality (Virtual Reality, VR for short) device, an intelligent wearable device, or another electronic device having an interface component.

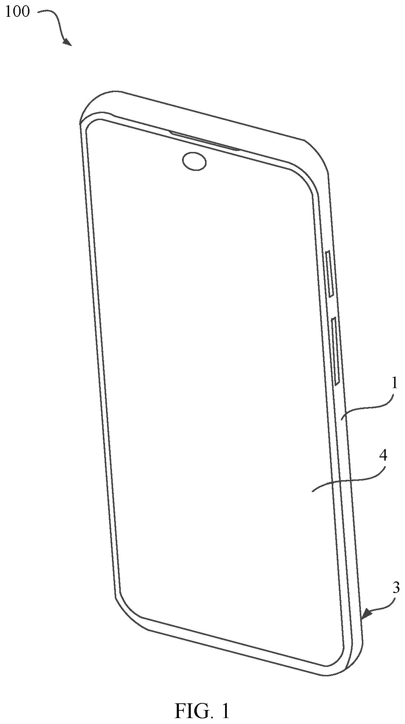

FIG. 1 is a diagram of a structure of an electronic device.

Referring to FIG. 1, the electronic device 100 includes a housing. When the electronic device 100 is a non-foldable electronic device (for example, a non-foldable mobile phone), the housing may include a first middle frame 1 and a rear cover 3. The rear cover 3 is connected to a side of the first middle frame 1, and provides, together with the first middle frame 1, a structural frame for the non-foldable electronic device.

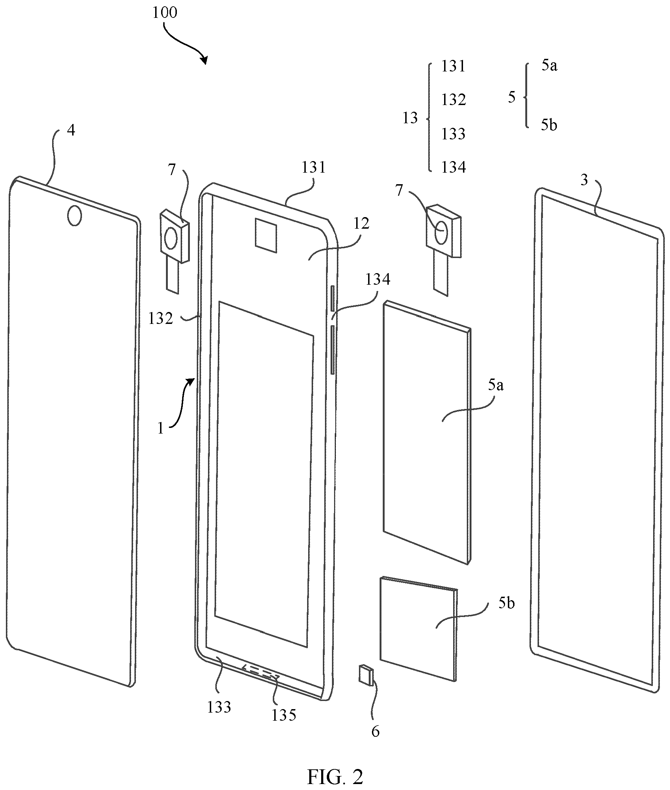

FIG. 2 is an exploded view of the electronic device in FIG. 1.

Referring to FIG. 2, the first middle frame 1 includes a middle board 12 and a frame 13. The frame 13 is disposed around a peripheral side edge of the middle board 12, and forms the first middle frame 1 together with the middle board 12. The frame 13 is a square ring structure formed by a top border frame 131, a left border frame 132, a bottom border frame 133, and a right border frame 134 that are connected head to tail. Referring to FIG. 2, in some embodiments, when the electronic device 100 has a display function (for example, the electronic device 100 is a mobile phone or a tablet computer), the electronic device 100 further includes a first display screen 4. The first display screen 4 covers the first middle frame 1, to implement assembly of the first display screen 4 on the first middle frame 1.

As shown in FIG. 2, when the electronic device 100 is a non-foldable electronic device, the first display screen 4 may be a rigid display screen. The rigid display screen covers the first middle frame 1 on a side away from the rear cover 3, and together with the first middle frame 1 and the rear cover 3, encloses an accommodation space (not shown in the figure) of the electronic device 100. The accommodation space not only may be used for accommodating a circuit board 5 and a battery (not shown in the figure) of the electronic device 100, but also may accommodate functional components such as an interface component 6, a receiver, a camera module 7, a speaker (not shown in the figure), and a microphone (not shown in the figure).

The circuit board 5 may include a primary circuit board 5a (a primary board for short) and a secondary circuit board 5b (a secondary board for short). The primary circuit board 5a may be construed as a circuit board carrying electronic components such as a system on a chip (system on a chip, SoC), a dynamic random access memory (Dynamic Random Access Memory, DRAM), a power management unit, a flash memory chip, and a radio frequency chip. The secondary circuit board 5b may be construed as a circuit board carrying electronic components such as a microphone and a speaker.

The secondary circuit board 5b is usually disposed in the housing on a side facing the interface component 6. The primary circuit board 5a is usually disposed in the housing on a side facing away from the interface component 6. The first display screen 4 may be electrically connected to the primary circuit board 5a, so that the first display screen 4 can implement a display or operation function. The camera module 7 may also be electrically connected to the primary circuit board 5a, so that when a user enters a photographing instruction, the camera module 7 can be controlled, by using the circuit board 5, to photograph an image, thereby implementing a photographing function of the electronic device 100.

The interface component 6 may be a universal serial bus (Universal Serial Bus, USB) interface. Currently, the universal serial bus interface mainly includes a Micro USB interface and a Type-C interface. The bottom border frame 133 has a plug-in interface 135 communicating with the accommodation space. The interface component 6 is accommodated in the accommodation space and inserted in a middle part of the plug-in interface 135, and may be electrically connected to an external power supply, to charge the electronic device 100. Alternatively, the interface component 6 may electrically connect the electronic device 100 to another external device such as a headset or a storage device. The middle part of the plug-in interface 135 may be construed as a middle region in the plug-in interface 135 rather than an upper region or a lower region in the plug-in interface 135.

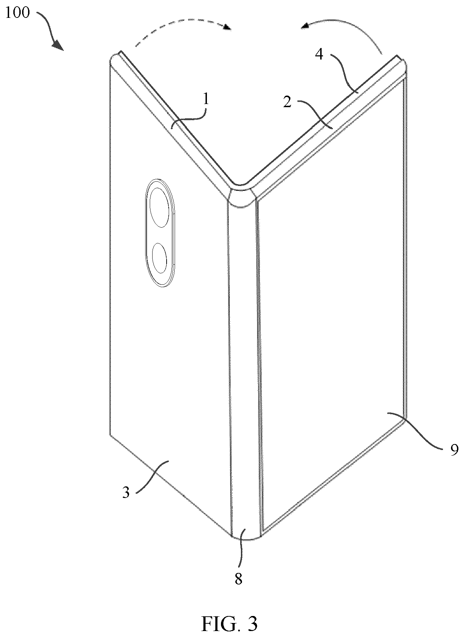

FIG. 3 to FIG. 5 are each a diagram of a structure of an electronic device in a different configuration according to an embodiment of this application.

Referring to FIG. 3 to FIG. 5, in some embodiments, when the electronic device 100 is a foldable electronic device, besides a first middle frame 1 and a rear cover 3, a housing may further include a second middle frame 2 rotatably connected to the first middle frame 1. The first middle frame 1 and the second middle frame 2 are rotatably connected on two sides of a rotating assembly 8, so that the first middle frame 1 and the second middle frame 2 can rotate relative to each other, thereby changing the configuration of the electronic device 100.

Specifically, the electronic device 100 may further include the rotating assembly 8. The first middle frame 1 and the second middle frame 2 are rotatably connected on two sides of the rotating assembly 8, to implement relative rotation of the first middle frame 1 and the second middle frame 2. The rotating assembly 8 may be a rotating shaft assembly, a hinge assembly, or another structural assembly capable of implementing rotation.

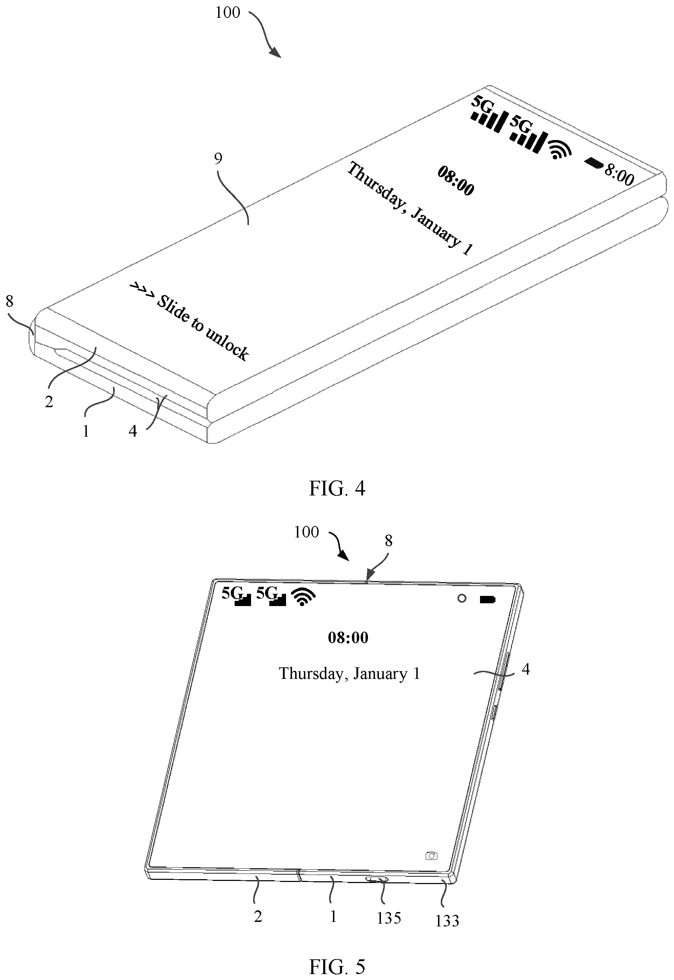

Referring to FIG. 3, when the first middle frame 1 and the second middle frame 2 move toward each other along a direction of an arrow in FIG. 3, the first middle frame 1 rotates relative to the second middle frame 2 and is superposed on the second middle frame 2. In this case, the first middle frame 1 and the second middle frame 2 are in a state of being stacked on each other, and the electronic device 100 is in a folded state shown in FIG. 4.

Referring to FIG. 3, when the first middle frame 1 and the second middle frame 2 move away from each other along a direction opposite to the arrow in FIG. 3, the first middle frame 1 rotates relative to the second middle frame 2 to a plane that the second middle frame 2 lies. In this case, the electronic device 100 is in an unfolded state shown in FIG. 5.

Referring to FIG. 3 to FIG. 5, when the electronic device 100 is a foldable electronic device (for example, a foldable-screen mobile phone), a first display screen 4 may be a flexible display screen. The first display screen 4 is located on a same side of the first middle frame 1 and the second middle frame 2, to facilitate assembly of the first display screen 4 in the electronic device 100.

In addition, when the configuration of the electronic device 100 changes, a shape of the first display screen 4 also changes accordingly. For example, when the electronic device 100 is in a folded state, the first display screen 4 is also folded accordingly, and when the electronic device 100 is in an unfolded state, the first display screen 4 is also unfolded accordingly.

As shown in FIG. 3 to FIG. 5, the first middle frame 1 and the second middle frame 2 may both be along the direction shown by the arrow in FIG. 3, so that when the electronic device 100 is in a folded state, the first display screen 4 may be bent and adhered to the first middle frame 1 and the second middle frame 2 and is located inside the electronic device 100 (as shown in FIG. 4). In this case, the electronic device 100 may be a device with an inward foldable screen.

Alternatively, in some embodiments, in a process in which the electronic device 100 changes from the unfolded state to the folded state, both the first middle frame 1 and the second middle frame 2 move toward a side away from the first display screen 4 to fold, so that the electronic device 100 is in the folded state. The first display screen 4 can still be bent and adhered to the first middle frame 1 and the second middle frame 2, but is completely exposed to the outside of the electronic device 100. In this case, the electronic device 100 may be a device with an outward foldable screen.

The first display screen 4 has a display surface and a non-display surface, and the display surface and the non-display surface are located on two opposite surfaces of the first display screen 4. The first display screen 4 has a drive board 41 on the non-display surface. The drive board 41 is a drive circuit board, and the drive circuit board is usually a flexible circuit board. Electronic components such as a driving component, a resistor, and a capacitor are disposed on the drive circuit board. A region in which these electronic components are disposed on the drive board 41 may be referred to as a component region. The first display screen 4 may be electrically connected to a circuit board 5 (such as a primary circuit board 5a) by using the drive circuit board, to implement a display or operation function of the first display screen 4.

The structure of the electronic device 100 in this application is further described below by using a device with an inward foldable screen as an example.

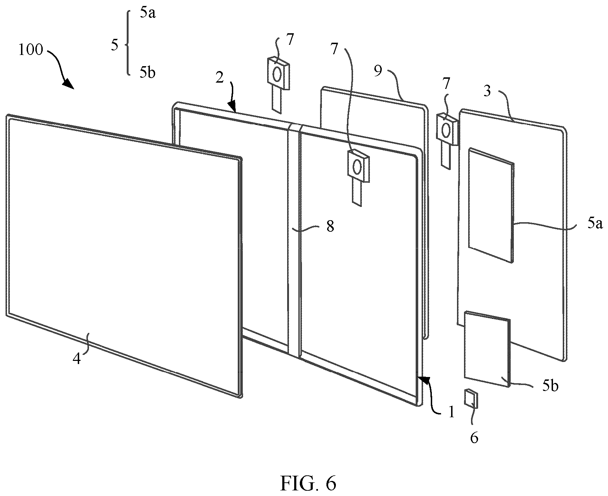

FIG. 6 is an exploded view of the electronic device in FIG. 5.

Referring to FIG. 6, in some embodiments, when the electronic device 100 is a device with an inward foldable screen, the electronic device 100 may further include a second display screen 9. The second display screen 9 may be a rigid display screen and is located on a side of the second middle frame 2 opposite to the first display screen 4. In this case, the rear cover 3 may be located on a side of the first middle frame 1 opposite to the first display screen 4. When the electronic device 100 is in the unfolded state, the flexible display screen may serve as a front surface of the electronic device 100, and the rear cover 3 and the second display screen 9 may serve as a rear surface of the electronic device 100. When the electronic device 100 is in the folded state, the rear cover 3 may serve as a rear surface of the electronic device 100, and the second display screen 9 may serve as a front surface of the electronic device 100.

As shown in FIG. 6, the rear cover 3, the first middle frame 1, the second middle frame 2, the first display screen 4, and the second display screen 9 together may enclose an accommodation space. Functional components such as the circuit board 5, a camera module 7, a battery, an interface component 6, a speaker, a microphone, and a receiver may be accommodated in the accommodation space. A plug-in interface 135 is usually provided in a bottom border frame 133 of the first middle frame 1 (as shown in FIG. 5). The interface component 6 is accommodated between the first middle frame 1 and the rear cover 3, is inserted in a middle part of the plug-in interface 135, and is electrically connected to the circuit board 5 (such as a secondary circuit board 5b) accommodated in the first middle frame 1, to electrically connect the electronic device 100 to an external device such as an external power supply, a headset, or a storage device.

In addition, the battery is further accommodated in the first middle frame 1, to supply power to an electronic element in the first middle frame 1. For positions of disposing other components such as the battery, the speaker, the microphone, and the receiver in the electronic device 100, refer to the descriptions in the related art. Details are not provided herein again.

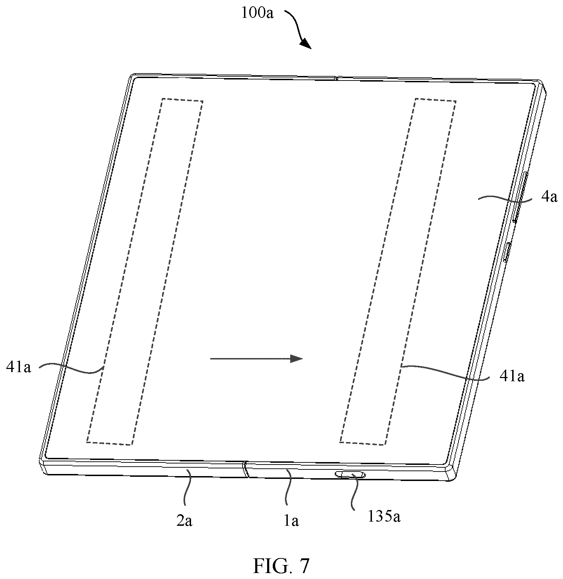

FIG. 7 is a diagram showing a position change of a drive board of a flexible display screen in an electronic device according to the related art.

Lightening and thinning and a large battery capacity are always main contradictions of a foldable electronic device. Referring to FIG. 7, in the related art, in an electronic device 100a, a drive board 41a of a first display screen 4a is moved from a second middle frame 2a to a first middle frame 1a. Similar to the first middle frame 1, the first middle frame 1a is also a middle frame located in the electronic device 100a and in which a plug-in interface 135a is provided and an interface component (not shown in the figure) is accommodated. Studies have shown that, this can improve space utilization of the electronic device 100a and increase a battery capacity, to satisfy requirements of people for lightening and thinning and a large battery capacity of a foldable electronic device (such as a foldable-screen mobile phone).

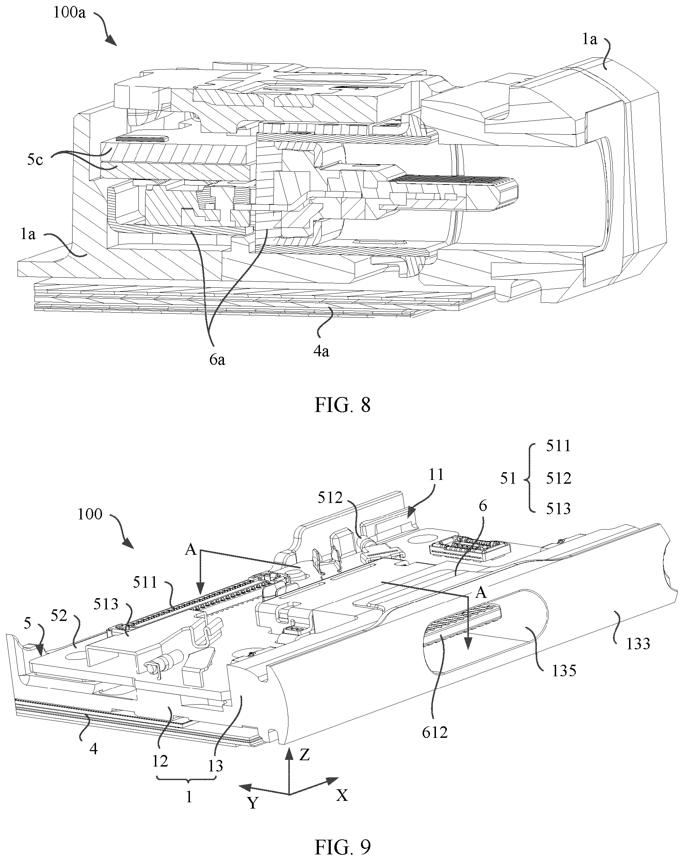

FIG. 8 is a diagram showing assembly of an interface component in an electronic device according to the related art.

Referring to FIG. 8, when a drive board (not shown in the figure) is disposed in a first middle frame 1a, the drive board, an interface component 6a, and a circuit board 5c are located in the first middle frame 1a. The circuit board 5c may be construed as the foregoing secondary circuit board 5b. Because the interface component 6a (for example, a Type-C interface) is usually soldered to a side of the circuit board 5c facing a first display screen 4a, a gap between the interface component 6a and a non-display surface of the first display screen 4a is relatively small. Because an available space in the first middle frame 1a is extremely limited, when both the drive board and the interface component 6a are located in the first middle frame 1a, without affecting lightening and thinning of the electronic device 100 (where a thickness of the entire machine does not change excessively greatly), there is no accommodation space in the first middle frame 1a for accommodating an electronic component on the drive board, and it is difficult for the electronic component on the drive board to be assembled in the first middle frame 1a, affecting assembly of the first display screen 4a on the first middle frame 1a and the second middle frame 2a.

Therefore, how to implement assembly of the electronic component of the drive board and the interface component in the first middle frame 1 while satisfying lightening and thinning of the electronic device has become a technical problem to be resolved.

In view of this, according to the electronic device 100 provided in this embodiment of this application, the interface component 6 is disposed on a side of the circuit board 5 facing away from the first display screen 4, so that a distance between the interface component 6 and the first display screen 4 can be increased. In this way, the electronic component on the drive board 41 and the interface component 6 can be accommodated in the first middle frame 1 while lightening and thinning of the electronic device 100 can be satisfied, allowing the first display screen 4 to be smoothly assembled on the first middle frame 1 and the second middle frame 2.

The structure of the electronic device 100 in this application is further described below with reference to the accompanying drawings and embodiments.

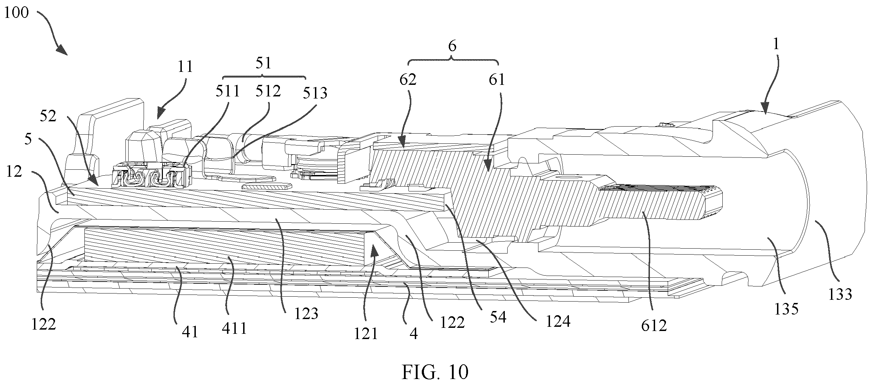

FIG. 9 is a first diagram showing assembly of an interface component in an electronic device according to an embodiment of this application. FIG. 10 is a cross-sectional view of the electronic device in FIG. 9 taken along a direction A-A.

Referring to FIG. 9 and FIG. 10, the electronic device 100 includes a circuit board 5, an interface component 6, a housing, and a first display screen 4. The housing includes a first middle frame 1 and a second middle frame (not shown in the figure) that are rotatably connected to each other. The first display screen 4 covers on a same side of the first middle frame 1 and the second middle frame. The first middle frame 1 has an accommodation cavity 11 and a plug-in interface 135 that communicate with each other. The circuit board 5 is located in the accommodation cavity 11. The interface component 6 is inserted in the plug-in interface 135 and is electrically connected to a surface of the circuit board 5 facing away from the first display screen 4. The interface component 6 is configured to be electrically connected to an external device.

In this way, the interface component 6 can be plugged into the plug-in interface 135, so that it can be assembled in the first middle frame 1. Meanwhile, when an external device is plugged into the interface component 6 at the plug-in interface 135, electrical connection and conduction between the electronic device 100 and the external device can be implemented by using the interface component 6.

The circuit board 5 in this application may be the foregoing secondary circuit board 5b, so that the interface component 6 is electrically connected to the secondary circuit board 5b, to electrically connect the electronic device 100 to the external device.

It should be noted that, for rotation connection of the first middle frame 1 and the second middle frame, refer to related descriptions above. Details are not described herein again.

Referring to FIG. 10, a drive board 41 is provided on a side of the first display screen 4 facing the first middle frame 1. An electronic component group 411 including at least one electronic component is provided on the drive board 41. The first middle frame 1 has an accommodating cavity 121 on a side facing the first display screen 4. The electronic component group 411 is located in the accommodating cavity 121.

Each space capable of accommodating an electronic component and enclosed by the first display screen 4, the first middle frame 1, and a rear cover 3 is an accommodation space of the electronic device 100 on a side of the first middle frame 1. That is, the accommodation space may include but is not limited to the accommodating cavity 121, the accommodation cavity 11, and the like.

Compared with the existing disposition in which the interface component 6a is located on the side of the circuit board 5c facing the first display screen 4a, in this application, the interface component 6 is electrically connected to a surface of the circuit board 5 facing away from the first display screen 4, so that a spacing between the interface component 6 and the first display screen 4 can be enlarged, to facilitate formation of the accommodating cavity 121 in the first middle frame 1, so that the electronic component group 411 can be located in the accommodating cavity 121 and is assembled in the first middle frame 1 together with the interface component 6, thereby implementing assembly of the drive board 41 in the first middle frame 1.

The first middle frame 1 is a middle frame located in the electronic device 100 and in which the plug-in interface 135 is provided and the interface component (not shown in the figure) is accommodated, and the drive board 41 is located in the first middle frame 1. In this way, not only the first display screen 4 an be assembled on the first middle frame 1 and the second middle frame 2, but also requirements of people for lightening and thinning and a large battery capacity of a foldable electronic device can be satisfied.

Therefore, in this application, through the disposition in which the interface component 6 is electrically connected to the surface of the circuit board 5 facing away from the first display screen 4, the assembly of the electronic component group 411, the drive board 41, and the interface component 6 in the first middle frame 1 can be implemented while lightening and thinning of the electronic device are satisfied.

The first display screen 4 may be a flexible display screen, so that when a configuration of the electronic device 100 changes, a shape of the first display screen 4 can change accordingly, to implement folding and unfolding functions of the electronic device 100. It should be noted that, when the configuration of the electronic device 100 changes, for the change in the shape of the first display screen 4, reference may be made to related descriptions above, and details are not described herein again.

The drive board 41 may be a drive circuit board, to drive the first display screen 4 and implement a display function of the first display screen 4. The electronic component group 411 may include a plurality of electronic components (not separately shown in the figure), and these electronic components may include, but are not limited to, the driving component, the resistor, the capacitor, and the like described above. For a structure of the drive board 41, refer to the descriptions in the related art. Details are not described herein again.

It should be noted that, when the electronic device 100 is a non-foldable electronic device (for example, a non-foldable mobile phone), a drive board 41 is also disposed on the first display screen 4 (a rigid display screen). With reference to the arrangement shown in FIG. 10, the interface component 6 and the drive board 41 may also be disposed in the first middle frame 1 of the non-foldable electronic device.

The structure of the electronic device 100 in this application is further described below by using an example in which the electronic device 100 is a foldable electronic device.

Compared with a Micro USB interface, a Type-C interface has a feature of blind plugging (adopting) with an external device. Therefore, when the Type-C interface is connected to the external device, a plugging direction of the external device on the Type-C interface is not limited, allowing the Type-C interface to be widely used in electronic devices. Therefore, the interface component 6 in this application is mainly a Type-C interface.

The structure of the electronic device 100 in this application is further described below by using a Type-C interface as an example.

The interface component 6 has a plug-in terminal 612 plugged with an external device. A shape of the plug-in interface 135 matches a shape of the plug-in terminal 612. Using the Type-C interface as an example, an outer edge contour of the plug-in terminal 612 of the interface component 6 may be an oblong. Referring to FIG. 9, a shape of the plug-in interface 135 may be an oblong opening matching a shape of the plug-in terminal 612 of the interface component 6.

The interface component 6 may be electrically connected to the circuit board 5 through soldering or in another manner. In this application, a manner of connecting the interface component 6 to the circuit board 5 is not further limited.

Referring to FIG. 10, the surface of the circuit board 5 facing away from the first display screen 4 is an element surface 52 of the circuit board 5. The element surface 52 has at least one element 51 protruding from the element surface 52. The element 51 is disposed around a peripheral side of the interface component 6, so that the interface component 6 can reuse, in a thickness direction of the electronic device 100, a space occupied by the element 51 in the first middle frame 1, to reduce or even prevent a particular impact on a thickness of the electronic device 100 when the interface component 6 is disposed on the element surface 52. In this way, while a lightening and thinning design of the electronic device 100 is satisfied, a requirement of disposing the element 51 on the circuit board 5 can be further satisfied by disposing the at least one element 51 around the peripheral side of the interface component 6. For the thickness direction of the electronic device 100, refer to a Z direction in FIG. 9.

It should be noted that, when the interface component 6 is electrically connected to the element surface 52, positions at which at least some elements on the circuit board 5 are to be disposed on the element surface 52 need to be rearranged, to allow at least some elements 51 to be disposed around the peripheral side of the interface component 6, to ensure that the interface component 6 can be electrically connected to the element surface 52 and is inserted in the plug-in interface 135.

The element 51 may include at least one of an electronic element and a fastening element, so that the interface component 6 can reuse, in the thickness direction of the electronic device 100, a space occupied by the at least one of the electronic element and the fastening element in the first middle frame 1, to reduce or even prevent a particular impact on the thickness of the electronic device 100 when the interface component 6 is disposed on the element surface 52.

The electronic element may be a board-to-board (Board-to-board Connectors, BTB) connector 511, a coaxial line 512, or another electronic component on the circuit board 5.

The fastening element includes at least one of an elastic piece 513 and a fastener. The fastener may include, but is not limited to, a screw or a bolt on the circuit board 5. In this way, the interface component 6 can reuse, in the thickness direction of the electronic device 100, a space occupied by the electronic component, the elastic piece 513, or the fastener in the first middle frame 1, to reduce or even prevent a particular impact on the thickness of the electronic device 100 when the interface component 6 is disposed on the element surface 52.

In some embodiments, when a height of the interface component 6 on the element surface 52 is less than or equal to a maximum height of the element 51 on the element surface 52 (for example, the element 51 is a board-to-board connector 511 or an elastic piece 513), the interface component 6 may completely reuse, in the thickness direction of the electronic device 100, a space occupied by the board-to-board connector 511 or the elastic piece 513 in the first middle frame 1, to prevent an impact on the thickness of the electronic device 100 when the interface component 6 is disposed on the element surface 52, thereby satisfying the lightening and thinning design of the electronic device 100.

Referring to FIG. 10, in some other embodiments, when a height of the interface component 6 on the element surface 52 is greater than a maximum height of the element 51 on the element surface 52 (for example, the element 51 is a board-to-board connector 511 or an elastic piece 513), the interface component 6 can partially reuse, in the thickness direction of the electronic device 100, a space occupied by the board-to-board connector 511 or the elastic piece 513 in the first middle frame 1, to reduce an excessively large impact on the thickness of the electronic device 100 when the interface component 6 is disposed on the element surface 52, thereby also satisfying the lightening and thinning design of the electronic device 100.

Referring to FIG. 10, as described above, the first middle frame 1 includes a middle board 12 and a frame 13. The frame 13 is disposed around a peripheral side of the middle board 12 and surrounds the middle board 12 to form the accommodation cavity 11. The plug-in interface 135 is located on the frame 13. For a structure of the frame 13, refer to related descriptions above. Details are not described herein again. Specifically, the plug-in interface 135 may be provided on a bottom border frame 133 in the frame 13.

In some embodiments, in some embodiments, the accommodating cavity 121 may be a recessed region in the middle board 12 recessed on a side facing the circuit board 5 (as shown in FIG. 10). In this way, the accommodating cavity 121 can be formed in the middle board 12 while structural strength of the first middle frame 1 is not affected, thereby facilitating assembly of the electronic component group 411 and the drive board 41 in the first middle frame 1.

Specifically, the middle board 12 is bent toward a side of the circuit board 5 at a position corresponding to the electronic component group 411 to form the accommodating cavity 121. The middle board 12 is supported on the circuit board 5 (as shown in FIG. 10). In this way, the accommodating cavity 121 can be formed by bending of the middle board 12 without affecting the structural strength of the first middle frame 1, thereby facilitating assembly of the electronic component group 411 in the accommodating cavity 121. In addition, the middle board 12 can further be supported on the circuit board 5, to fasten the circuit board 5 in the accommodation cavity 11.

As shown in FIG. 10, the middle board 12 has two bent portions 122 and a horizontal support portion 123 that supports the circuit board 5. The two bent portions 122 are disposed on two opposite sides of the electronic component group 411 along an axial direction of the plug-in interface 135 and are both bent toward a side of the circuit board 5. The horizontal support portion 123 is connected between the two bent portions 122 and surrounds the two bent portions 122 to form the accommodating cavity 121. In this way, the middle board 12 can effectively use a distance between the interface component 6 and the first display screen 4 and form the accommodating cavity 121 by partial bending of the middle board 12, to implement assembly of the electronic component group 411 and the drive board 41 in the first middle frame 1. The axial direction of the plug-in interface 135 is parallel to a length direction of the first middle frame 1. For details, refer to a Y direction in FIG. 9.

In addition, the horizontal support portion 123 supports the circuit board 5, so that there is a relatively large contact area between the circuit board 5 and the middle board 12, to ensure that the middle board 12 has a relatively good support effect for the circuit board 5, allowing the middle board 12 to be stably supported on the circuit board 5.

An outer edge contour of the accommodating cavity 121 matches that of the electronic component group 411. For example, the outer contour of the accommodating cavity 121 is the same as or similar to that of the electronic component group 411 (as shown in FIG. 10). This can reduce a space occupied by the electronic component group 411 in the first middle frame 1 while ensuring that the electronic component group 411 can be completely accommodated in the accommodating cavity 121,, thereby further improving space utilization in the electronic device 100.

It should be noted that, in some embodiments, a notch capable of accommodating the electronic component group 411 may be further provided in the middle board 12. The notch can form the foregoing accommodating cavity 121, and assembly of the electronic component group 411 in the first middle frame 1 can also be implemented.

The structure of the electronic device 100 of this application is further described below by using an example in which the accommodating cavity 121 is a recessed region in the middle board 12.

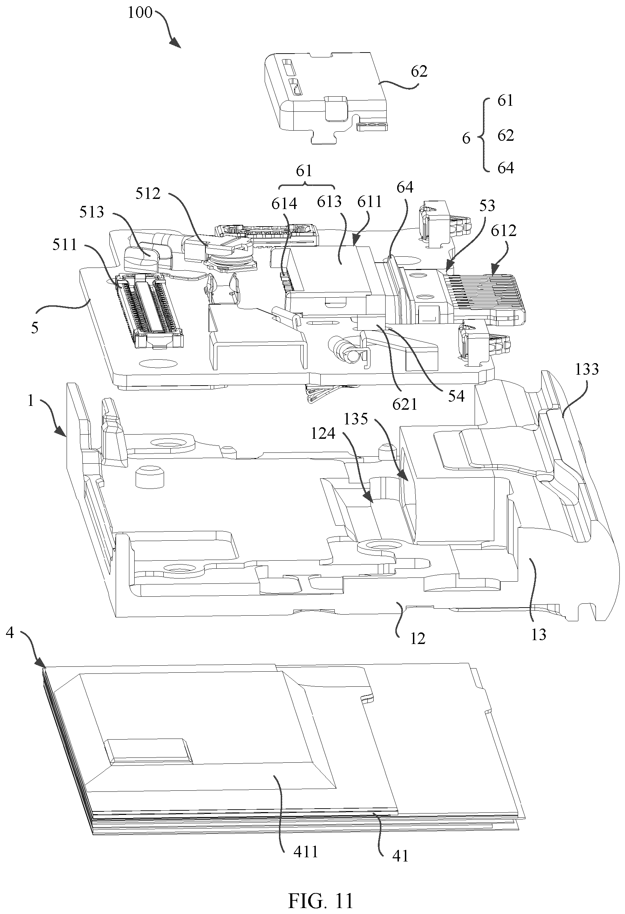

FIG. 11 is a partial exploded view of an electronic device according to an embodiment of this application.

Referring to FIG. 10 and FIG. 11, the interface component 6 may include a component body 61. The component body 61 has an electrical connection terminal 611 and a plug-in terminal 612 connected to the electrical connection terminal 611. The electrical connection terminal 611 is electrically connected to a side of the circuit board 5 facing a plug-in interface 135. The plug-in terminal 612 is inserted in a middle part of the plug-in interface 135. This not only allows the interface component 6 to be electrically connected to the circuit board 5 by using the electrical connection terminal 611, but also ensures smooth plugging of an external device at the plug-in terminal 612 in the plug-in interface 135, thereby ensuring smooth conduction between the external device and the electronic device 100.

As shown in FIG. 11, the component body 61 may include, but is not limited to, an insulation member 613 and a plurality of pins 614. The insulation member 613 has a first end portion and a second end portion. The first end portion is in contact with the circuit board 5, and the second end portion is inserted in the plug-in interface 135. The plurality of pins 614 are spaced apart on the insulation member 613 and insulated from each other.

First ends of the plurality of pins 614 may extend to the outside of the first end portion, and are soldered to pads on the circuit board 5. The first ends of the plurality of pins 614 and the first end portion jointly form the electrical connection terminal 611. Second ends of the plurality of pins 614 may all extend to the second end portion, and form the plug-in terminal 612 together with the second end portion. The plug-in terminal 612 may be referred to as a tongue of the interface component 6, to implement an electrical connection between the electronic device 100 and an external device at the interface component 6.

It should be noted that, in some embodiments, as shown in FIG. 11, the interface component 6 may be further provided with a sealing ring 64. The sealing ring 64 may be sleeved over the plug-in terminal 612, allowing the plug-in terminal 612 to be sealed in the plug-in interface 135 through the sealing ring 64 when the plug-in terminal 612 is inserted in the plug-in interface 135, to prevent a liquid from entering the electronic device 100 through the plug-in interface 135.

An insertion space 124 communicating with the plug-in interface 135 is provided between the circuit board 5 and the plug-in interface 135. The plug-in terminal 612 is bent toward a side of the first display screen 4 and runs through the insertion space 124 to be inserted in the middle part of the plug-in interface 135 (as shown in FIG. 10), to ensure, through bending of the plug-in terminal 612, that the interface component 6 can still be inserted in the middle part of the plug-in interface 135 when the interface component 6 is located on the element surface 52, thereby ensuring smooth plugging of an external device at the plug-in terminal 612 in the plug-in interface 135.

An edge of the circuit board 5 on a side facing the plug-in interface 135 is provided with an opening 53. The insertion space 124 is provided between an edge of the opening 53 and the first middle frame 1. Specifically, at the edge of the opening 53, the circuit board 5 and the middle board 12 and the frame 13 of the first middle frame 1 can jointly enclose the insertion space 124. The electrical connection terminal 611 is in contact with the circuit board 5, so that the electrical connection terminal 611 is electrically connected to the circuit board 5. The plug-in terminal 612 is clamped in the opening 53 and bent in the insertion space 124 toward a side of the first display screen 4, so that the plug-in terminal 612 runs through the insertion space 124 to be inserted in the middle part of the plug-in interface 135.

In addition, the clamping of the plug-in terminal 612 in the opening 53 not only facilitates the electrical connection between the electrical connection terminal 611 and the circuit board 5, but also allows the interface component 6 to further reuse a particular space with the circuit board 5 in the thickness direction of the electronic device 100, to further reduce a height of the interface component 6 on the circuit board 5, thereby satisfying the lightening and thinning design of the electronic device 100.

Referring to FIG. 11 and with reference to FIG. 10, the middle board 12 is bent toward a side of the first display screen 4 at a position corresponding to the opening 53, to enlarge the insertion space 124, to allow the plug-in terminal 612 to be bent toward the side of the first display screen 4. In this way, it is ensured that the plug-in terminal 612 can be inserted in the middle part of the plug-in interface 135, so that the interface component 6 can further reuse, in the thickness direction of the electronic device 100, a space occupied by the drive board 41 in the first middle frame 1, thereby further satisfying the lightening and thinning design of the electronic device 100.

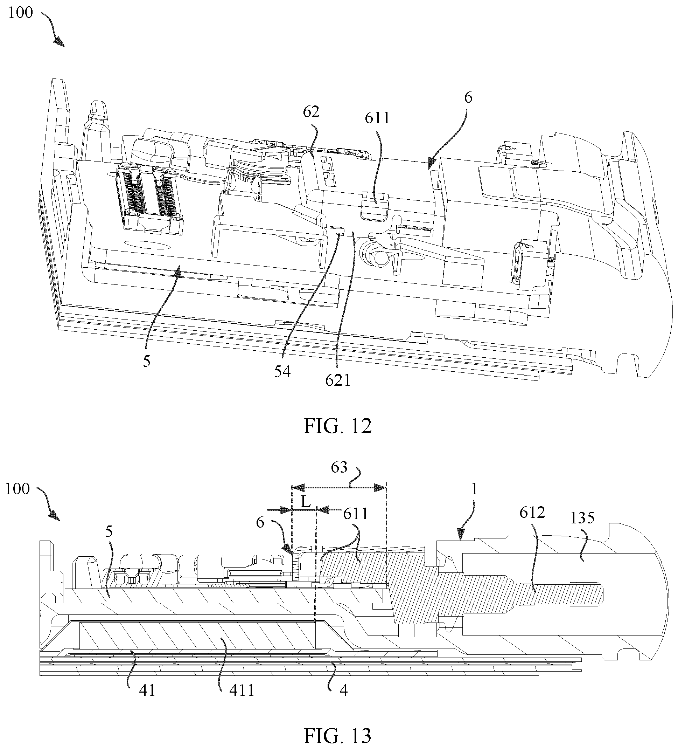

FIG. 12 is a second diagram showing assembly of an interface component in an electronic device according to an embodiment of this application.

Referring to FIG. 11 and FIG. 12, the interface component 6 further includes a cover plate 62. The cover plate 62 covers the electrical connection terminal 611 and is connected to the circuit board 5, so that the cover plate 62 is pressed onto the electrical connection terminal 611. This not only increases stability of the electrical connection between the electrical connection terminal 611 and the circuit board 5, but also can protect the electrical connection terminal 611 by covering the electrical connection terminal 611 with the cover plate 62.

As shown in FIG. 12, at least two clamping jaws 621 may be disposed on a peripheral side of the cover plate 62. The circuit board 5 is provided with a clamping slot 54 at a position corresponding to the clamping jaw 621. The clamping jaw 621 may be inserted in the clamping slot 54, to implement assembly of the cover plate 62 on the circuit board 5.

FIG. 13 is a diagram of a structure of the electronic device in FIG. 10 from a different perspective.

Referring to FIG. 13, in some embodiments, projection of the interface component 6 and projection of the electronic component group 411 on the circuit board 5 at least partially overlap, so that a space occupied by the interface component 6 in the first middle frame 1 can be reused by the electronic component group 411 in a length direction of the first middle frame 1, to reduce a space occupied by the electronic component group 411 and the interface component 6 in the length direction of the first middle frame 1. For the length direction of the first middle frame 1, refer to the Y direction in FIG. 9.

A battery is usually disposed on the drive board 41 in the first middle frame 1, and is located on a side of the electronic component group 411 away from the interface component 6. In this way, after the space occupied by the electronic component group 411 and the interface component 6 in the length direction of the first middle frame 1 is reduced, the battery can be made larger in the first middle frame 1 to increase a capacity of the battery, thereby further satisfying a requirement for a large battery capacity of the electronic device 100 while implementing lightening and thinning of the electronic device 100.

An end (an end at which the electrical connection terminal 611 of the interface component 6 is located) of the interface component 6 electrically connected to the circuit board 5 has a first projection surface 63 on the circuit board 5, and the electronic component group 411 is at least partially located in the first projection surface 63, to allow the projection of the interface component 6 and the projection of the electronic component group 411 on the circuit board 5 to at least partially overlap, thereby satisfying the requirement for a large battery capacity of the electronic device 100 while reducing or avoiding an impact caused by the interface component 6 on the thickness of the electronic device 100.

As shown in FIG. 13, in some embodiments, the electronic component group 411 may be partially located in the first projection surface 63, so that the projection of the electronic component group 411 and the projection of the interface component 6 on the circuit board 5 may partially overlap. A length L of an overlapping region of the projection of the electronic component group 411 and the projection of the interface component 6 on the circuit board 5 may include, but is not limited to, 1 mm, 2 mm, 3 mm, or the like, to save a space equal to the length L in the length direction of the first middle frame 1, to satisfy a larger battery capacity of the electronic device 100 (such as a foldable electronic device). For example, when the length L is equal to 3 mm, a space of 3 mm occupied by the electronic component group 411 and the interface component 6 may be saved in the length direction of the first middle frame 1. A direction of the length L is parallel to the length direction of the first middle frame 1.

With development of science and technologies, after a size of the interface component 6 in the length direction of the first middle frame 1 is gradually reduced, the electronic component group 411 may alternatively be completely located in the first projection surface 63, so that projection of the electrical connection terminal 611 and projection of the electronic component group 411 on the circuit board 5 may completely overlap, to further reduce a space occupied by the electronic component group 411 and the interface component 6 in the length direction of the first middle frame 1, thereby further increasing the capacity of the battery.

According to the electronic device 100 provided in this embodiment of this application, the interface component 6 is flipped and electrically connected to the surface of the circuit board 5 away from the first display screen 4, so that the distance between the interface component 6 and the first display screen 4 can be increased, and the distance between the interface component 6 and the first display screen 4 can be effectively used. In this way, the electronic component group 411 and the drive board 41 can be accommodated in the first middle frame 1 while lightening and thinning of the electronic device 100 can be satisfied.

In the descriptions of the embodiments of this application, it should be noted that, Unless otherwise explicitly specified or defined, the terms such as "mount", "interconnect", and "connect" should be understood in a broad sense. For example, the connection may be a fixed connection, or an indirect connection through an intermediary, or may be an internal connection between two elements or an interaction relationship between two elements. A person of ordinary skill in the art may understand specific meanings of the foregoing terms in this application according to specific situations.

The terms such as "first", "second", "third", and "fourth" (if any) in the specification and claims of this application and in the accompanying drawings are used for distinguishing similar objects and not necessarily used for describing any particular order or sequence.

## Claims

1. An electronic device, comprising a circuit board, an interface component, a housing, and a first display screen, wherein the housing comprises a first middle frame and a second middle frame that are rotatably connected to each other, the first display screen covers on a same side of the first middle frame and the second middle frame, and the first middle frame has an accommodation cavity and a plug-in interface that communicate with each other; and the circuit board is located in the accommodation cavity, the interface component is inserted in the plug-in interface and is electrically connected to a surface of the circuit board facing away from the first display screen, and the interface component is configured to be electrically connected to an external device; and
a drive board is provided on a side of the first display screen facing the first middle frame, an electronic component group comprising at least one electronic component is provided on the drive board, the first middle frame has an accommodating cavity on a side facing the first display screen, and the electronic component group is located in the accommodating cavity.

2. The electronic device according to claim 1, wherein the surface of the circuit board facing away from the first display screen is an element surface of the circuit board, the element surface has at least one element protruding from the element surface, and the element is disposed around a peripheral side of the interface component.

3. The electronic device according to claim 2, wherein the element comprises at least one of an electronic element and a fastening element.

4. The electronic device according to claim 3, wherein the electronic element comprises at least one of a board-to-board connector and a coaxial line.

5. The electronic device according to claim 3, wherein the fastening element comprises at least one of an elastic piece and a fastener.

6. The electronic device according to claim 1, wherein the first middle frame comprises a middle board and a frame, the frame is disposed around a peripheral side of the middle board and surrounds the middle board to form the accommodation cavity, the plug-in interface is located on the frame, and the accommodating cavity is a recessed region in the middle board recessed on a side facing the circuit board.

7. The electronic device according to claim 6, wherein the middle board is bent toward a side of the circuit board at a position corresponding to the electronic component group to form the accommodating cavity, and the middle board is supported on the circuit board.

8. The electronic device according to claim 7, wherein the middle board has two bent portions and a horizontal support portion that supports the circuit board, and the two bent portions are disposed on two opposite sides of the electronic component group along an axial direction of the plug-in interface and are both bent toward a side of the circuit board; and
the horizontal support portion is connected between the two bent portions and surrounds the two bent portions to form the accommodating cavity.

9. The electronic device according to claim 6, wherein an outer edge contour of the accommodating cavity matches an outer edge contour of the electronic component group.

10. The electronic device according to any one of claims 1 to 9, wherein the interface component comprises a component body, the component body has an electrical connection terminal and a plug-in terminal connected to the electrical connection terminal, the electrical connection terminal is electrically connected to a side of the circuit board facing the plug-in interface, and the plug-in terminal is inserted in a middle part of the plug-in interface.

11. The electronic device according to claim 10, wherein an insertion space communicating with the plug-in interface is provided between the circuit board and the plug-in interface, and the plug-in terminal is bent toward a side of the first display screen and runs through the insertion space to be inserted in the middle part of the plug-in interface.

12. The electronic device according to claim 11, wherein an edge of the circuit board on a side facing the plug-in interface is provided with an opening, and the insertion space is provided between an edge of the opening and the first middle frame; and
the electrical connection terminal is in contact with the circuit board, and the plug-in terminal is clamped in the opening and bent in the insertion space toward a side of the first display screen.

13. The electronic device according to claim 10, wherein the interface component further comprises a cover plate, and the cover plate covers the electrical connection terminal and is connected to the circuit board.

14. The electronic device according to any one of claims 1 to 9, wherein projection of the interface component and projection of the electronic component group on the circuit board at least partially overlap.

15. The electronic device according to claim 14, wherein an end of the interface component electrically connected to the circuit board has a first projection surface on the circuit board, and the electronic component group is at least partially located in the first projection surface.

16. The electronic device according to any one of claims 1 to 9, wherein the first display screen is a flexible display screen, and the drive board is a drive circuit board.
